# EUROPÄISCHE PATENTSCHRIFT

(11) **EP 4 520 547 B1**
(45) Veröffentlichungstag und Bekanntmachung des Hinweises auf die Patenterteilung: **13.05.2026**
(21) Anmeldenummer: 24196127.5
(22) Anmeldetag: 23.08.2024
(51) Int. Cl.: B60C 11/00

(54) **FAHRZEUGREIFEN**
VEHICLE TYRE
BANDAGE PNEUMATIQUE POUR VÉHICULES

(30) Priorität: 06.09.2023 DE 102023208604
(43) Veröffentlichungstag der Anmeldung: 12.03.2025
(73) Patentinhaber: Continental Reifen Deutschland GmbH, 30175 Hannover (DE)
(72) Erfinder: Römer, Justus, 30175 Hannover (DE)
(74) Vertreter: Continental Corporation

(56) Entgegenhaltungen:
- EP-A1- 0 662 396
- EP-A1- 4 382 314
- EP-B1- 2 268 493
- DE-B4- 102008 018 340
- DE-B4- 112013 001 701
- US-A1- 2012 298 271
- US-A1- 2016 016 435
- US-B2- 6 959 744

## Beschreibung

Die Erfindung betrifft einen Fahrzeugreifen mit einem Laufstreifen mit einer Bodenaufstandsfläche mit einer Footprintbreite und zwei Footprintkanten, wobei der Laufstreifen oder eine die Außenfläche des Laufstreifens mitbildende, radial äußere Laufstreifenschicht in axialer Richtung aus einem Laufstreifenhauptteil und einem schulterseitigen Laufstreifenteil oder aus dem Laufstreifenhauptteil und je einem schulterseitigen Laufstreifenteil in jeder Laufstreifenschulter gebildet ist, wobei der bzw. jeder schulterseitige Laufstreifenteil
a) an der Außenfläche an der jeweiligen Footprintkante endet und ausgehend von dieser in Richtung zum jeweiligen seitlichen Laufstreifenrand verläuft,
b) die jeweilige Footprintkante - ermittelt an der Außenfläche des Laufstreifens - in Richtung Reifenäquatorialebene in axialer Richtung um bis zu 4,0 mm überragt oder
c) zur jeweiligen Footprintkante - ermittelt an der Außenfläche des Laufstreifens - in Richtung Reifenäquatorialebene in axialer Richtung einen Abstand aufweist,
wobei der Laufstreifenhauptteil und der bzw. jeder schulterseitige Laufstreifenteil aus Gummimaterial mit je einem Verlustfaktor tan δ bei 70°C, ermittelt nach DIN 53 513, bestehen, wobei der Verlustfaktor tan δ bei 70° des Gummimaterials des Laufstreifenhauptteils vom Verlustfaktor tan δ bei 70° des Gummimaterials des bzw. jedes schulterseitigen Laufstreifenteils abweicht.

Ein derartiger Fahrzeugreifen ist beispielsweise aus der DE 10 2016 218 940 A1 bekannt. Dieser Fahrzeugreifen weist einen Laufstreifen mit einem zentralen Laufstreifenteil (Laufstreifenhauptteil) und zwei schulterseitigen Laufstreifenteilen auf. Das Gummimaterial des zentralen Laufstreifenteils weist einen Verlustfaktor tan δ bei 70°C, ermittelt nach DIN 53 512, auf, welcher kleiner ist als der Verlustfaktor tan δ bei 70°C des Gummimaterials der schulterseitigen Laufstreifenteile. Der Fahrzeugreifen soll gute Brems- und Handlingeigenschaften sowie einen geringen Rollwiderstand aufweisen.

Die US 2016/016435 A1 offenbart einen Fahrzeugluftreifen mit einem Laufstreifen mit einer die Laufstreifenaußenfläche mitbildenden, radial äußeren Laufstreifenschicht und einer radial inneren Laufstreifenschicht. Die radial äußere Laufstreifenschicht ist in axialer Richtung aus einem die Reifenäquatorialebene passierenden Laufstreifenhauptteil und zwei schulterseitigen Laufstreifenteilen gebildet, wobei diese Laufstreifenteile gemeinsam die Laufstreifenaußenfläche mitbilden. Der Laufstreifenhauptteil weist radial innerhalb der schulterseitigen Laufstreifenteile verlaufende, diese kontaktierende Ausläufer mit einer Dicke von 1,0 mm bis 2,0 mm sowie in axialer Richtung eine ohne seine Ausläufer ermittelte Breite von 30% bis 70% der Footprintbreite auf. Die Rückprallelastizität bei 70°C, ermittelt gemäß DIN 53512, des Gummimaterials der schulterseitigen Laufstreifenteile ist bevorzugt größer als jene des Gummimaterials des Laufstreifenhauptteils, sodass folglich der Verlustfaktor tan δ bei 70°C des Gummimaterials der schulterseitigen Laufstreifenteile bevorzugt kleiner ist als jener des Gummimaterials des Laufstreifenhauptteils. Ferner ist der dynamische Elastizitätsmodul E' bei 55°, ermittelt gemäß DIN 53513, des Gummimaterials der schulterseitigen Laufstreifenteile kleiner als jener des Gummimaterials des Laufstreifenhauptteils. Ein solcher Reifen soll im Hinblick auf den zwischen dem Rollwiderstand und den Handlingeigenschaften, insbesondere der Schräglauffestigkeit, bestehenden Zielkonflikt optimiert sein.

Aus der DE 11 2013 001 701 B4 ist ein Fahrzeugluftreifen mit einem Laufstreifen mit einer radial inneren Laufstreifenschicht und einer radial äußeren Laufstreifenschicht mit einem die Reifenäquatorialebene passierenden Laufstreifenhauptteil mit einer in axialer Richtung ermittelten Breite von 20% bis 70%, insbesondere von 30% bis 60%, der Bodenaufstandsflächenbreite und zwei schulterseitigen Laufstreifenteilen bekannt. Die schulterseitigen Laufstreifenteile sind jeweils mit einer schmalen Umfangsrille versehen. Das Gummimaterial des Laufstreifenhauptteils weist einen Verlustfaktor tan δ bei 0° (Norm nicht erwähnt) auf, der höher ist als jener des Gummimaterials der schulterseitigen Laufstreifenteile. Das Gummimaterial der schulterseitigen Laufstreifenteile weist einen Verlustfaktor tan δ bei 60° von 0,15 oder weniger und das Gummimaterial des Laufstreifenhauptteils weist einen Verlustfaktor tan δ bei 60° von 0,1 bis 0,35 auf, wobei der Verlustfaktor tan δ bei 60°C des Gummimaterials der schulterseitigen Laufstreifenteile kleiner ist als jener des Gummimaterials des Laufstreifenhauptteils. Da der Verlustfaktor tan δ bei 0° bekannter Weise als Indikator für den Nassgriff (je höher desto besser der Nassgriff) und der Verlustfaktor tan δ bei 60° bekannter Weise als Indikator für den Rollwiderstand (je kleiner desto besser, geringer der Rollwiderstand) gilt, ist der Laufstreifenhauptteil im Hinblick auf den Nassgriff und sind die schulterseitigen Laufstreifenteile im Hinblick auf den Rollwiderstand optimiert.

Die EP 0 662 396 A1 offenbart einen Fahrzeugreifen mit einen Laufstreifen aus einem Laufstreifenhauptteil mit einer in axialer Richtung ermittelten Breite von 82% bis 96% der Footprintbreite, zwei schulterseitigen Laufstreifenteilen und einem radial innerhalb des Laufstreifenhauptteils liegenden, radial inneren Laufstreifenteil. Das Gummimaterial der schulterseitigen Laufstreifenteile weist einen größeren Weiterreißwiderstand, ermittelt nach ASTM D 624 Form B, auf als das Gummimaterial des Laufstreifenhauptteils. Das Gummimaterial des Laufstreifenhauptteils weist ferner eine Rückprallelastizität, ermittelt nach ASTM D 1054 mit einem Goodyear-Healey-Pendel bei 100°C, auf, welche größer ist als jene des Gummimaterials der schulterseitigen Laufstreifenteile, wobei die Rückprallelastizität des Gummimaterials des Laufstreifenhauptteils 74% bis 95%, insbesondere von 75% bis 90%, und die Rückprallelastizität des Gummimaterials des schulterseitigen Laufstreifenteile 60% bis 75%, insbesondere 65% bis 72%, beträgt. Der radial innere Laufstreifenteil soll unter Aufrechterhaltung einer gewissen Flexibilität eine gute Riss- und Alterungsbeständigkeit aufweisen sowie kaum einen Beitrag zum Rollwiderstand leisten. Der Laufstreifenhauptteil soll für einen geringen Rollwiderstand sorgen.

Aus der US 2012/0298271 A1 ist ein Fahrzeugreifen mit einem Laufstreifen mit einer radial äußeren Laufstreifenschicht mit einem Laufstreifenhauptteil mit einer in axialer Richtung ermittelten Breite von zirka 60% der Laufstreifenbreite und zwei schulterseitigen Laufstreifenteilen bekannt. Das Gummimaterial des Laufstreifenhauptteils weist einen maximalen Verlustfaktor (Verlustfaktor bei jener Temperatur, bei welcher ein das Maximum vorliegt) von größer 0,19 auf. Das Gummimaterial der schulterseitigen Laufstreifenteile weist einen maximalen Verlustfaktor von höchstens 0,15 auf. Der Reifen ist für Baumaschinen vorgesehen, wobei der Laufstreifen eine gute Haltbarkeit aufweisen soll.

Die EP 2 268 493 B1 offenbart einen Nutzfahrzeugreifen mit einem Laufstreifen mit einem Laufstreifenhauptteil und zwei schulterseitigen Laufstreifenteilen, welche jeweils eine in axialer Richtung ermittelte Breite von 10% bis 20% der Footprintbreite aufweisen. Die Footprintkanten sind - wie für Nutzfahrzeugreifen üblich - scharfkantig ausgeführt. Das Gummimaterial der schulterseitigen Laufstreifenteile weist eine Rückprallelastizität, ermittelt nach DIN 53512 bei Raumtemperatur auf, welche um mindestens 2 Prozentpunkte, insbesondere um mindestens 4 Prozentpunkte, höher ist als jene des Gummimaterials des Laufstreifenhauptteils. Die Rückprallelastizität bei Raumtemperatur des Gummimaterials der schulterseitigen Laufstreifenteile beträgt 40% bis 60%, insbesondere 45% bis 55%. Die Rückprallelastizität bei Raumtemperatur des Gummimaterials des Laufstreifenhauptteils beträgt 30% bis 50%, insbesondere 35% bis 45%. Dieser Nutzfahrzeugreifen soll im Laufstreifenmittelbereich eine gute Chipping- und Chunking-Resistenz und in den Laufstreifenschulterbereichen einen reduzierten Wärmeaufbau aufweisen.

Aus der DE 10 2008 018 340 B4 ist ein Fahrzeugluftreifen mit einem Laufstreifen mit einer radial äußeren Laufstreifenschicht und einer radial inneren Laufstreifenschicht bekannt, wobei die radial äußere Laufstreifenschicht in axialer Richtung aus einem Laufstreifenhauptteil und zwei schulterseitigen Laufstreifenteilen gebildet ist. Der Laufstreifenhauptteil besteht aus einem ersten Gummimaterial und die schulterseitigen Laufstreifenteile bestehen aus einem sich vom ersten Gummimaterial unterscheidendem, zweiten Gummimaterial, wobei der Laufstreifenhauptteil wahlweise aus einer Kautschukmischung A oder B und die schulterseitigen Laufstreifenteile aus der jeweils anderen Kautschukmischung A, B gefertigt ist bzw. sind. Die Kautschukmischungen A, B enthalten SSBR-Kautschuk, wobei der SSBR-Kautschuk der Kautschukmischung A eine Glasübergangstemperatur aufweist, welche sich von jener des SSBR-Kautschuks der Kautschukmischung B um maximal 20°C unterscheidet, wodurch ein weitgehend gleichmäßiger Laufstreifenabrieb über die Laufstreifenbreite ermöglicht sein soll. Das Gummimaterial aus der Kautschukmischung A weist eine Rückprallelastizität bei Raumtemperatur, ermittelt nach DIN 53512, von 40% bis 55%, auf. Das Gummimaterial aus der Kautschukmischung B weist eine Rückprallelastizität bei Raumtemperatur, ermittelt nach DIN 53512, von 30% bis 50% auf.

Aus der US 6 959 744 B2 ist ein Fahrzeugreifen mit einem Laufstreifen mit einer radial äußeren Laufstreifenschicht und einer radial inneren Laufstreifenschicht bekannt, wobei die radial äußere Laufstreifenschicht einen Laufstreifenhauptteil mit einer in axialer Richtung ermittelten Breite von zirka 60% der Footprintbreite und zwei schulterseitige Laufstreifenteile aufweist. Die schulterseitigen Laufstreifenteile bestehen aus einem Gummimaterial mit einem Verlustfaktor tan δ bei 0°C von 0,05 bis 0,12 und der Laufstreifenhauptteil besteht aus einem Gummimaterial mit einem Verlustfaktor tan δ bei 0°C von 0,12 bis 0,50, wodurch der Fahrzeugreifen einen guten Nassgriff aufweisen soll.

Es ist bekannt, dass bei der Auslegung vom Gummimaterialen im Hinblick auf den Rollwiderstand und die Bremsperformance ein Zielkonflikt besteht, d.h. eine Verbesserung (Verringerung) des Rollwiderstands geht meist mit einer Verschlechterung der Bremsperformance einher.

Der Erfindung liegt daher die Aufgabe zugrunde, einen Fahrzeugreifen der eingangs genannten Art im Hinblick auf den Zielkonflikt zwischen dem Rollwiderstand und der Bremsperformance auf günstigere Weise als bisher zu gestalten.

Gelöst wird die gestellte Aufgabe erfindungsgemäß dadurch, dass der Verlustfaktor tan δ bei 70°C des Gummimaterials der schulterseitigen Laufstreifenteile kleiner ist als der Verlustfaktor tan δ bei 70°C des Gummimaterials des Laufstreifenhauptteils.

Das Gummimaterial der schulterseitigen Laufstreifenteile wird beim Abrollen des Reifens temporär besonders deutlich verformt ("abgeplattet"). Der kleinere Verlustfaktor sorgt für eine geringe Dämpfung, sodass die Energieverluste durch Hysterese im temporär besonders deutlich verformten Gummimaterial der schulterseitigen Laufstreifenteile gering gehalten werden, sodass in der Folge der Rollwiderstand gering ist.

Das Gummimaterial des Laufstreifenhauptteils wird beim Abrollen - im Vergleich zum Gummimaterial der schulterseitigen Laufstreifenteile- weniger stark verformt. Das sich vor allem unter Bremsbelastung temporär stark verformende Gummimaterial des Laufstreifenhauptteils verbessert - bedingt durch die unter Bremsbelastung mit der Hysterese einhergehenden Hemmung des Vorwärtsimpulses - die Bremsperformance.

Gemäß einer bevorzugten Ausführung beträgt der Verlustfaktor tan δ bei 70°C des Gummimaterials des bzw. jedes schulterseitigen Laufstreifenteils 10% bis 90%, insbesondere 30% bis 60%, bevorzugt 40% bis 50%, des Verlustfaktors tan δ bei 70°C des Gummimaterials des Laufstreifenhauptteils. Dies trägt zu einer besonders vorteilhaften Lösung des erwähnten Zielkonflikts bei.

Ferner ist es bevorzugt, wenn der Verlustfaktor tan δ bei 70°C des Gummimaterials des Laufstreifenhauptteils 0,05 bis 0,16 beträgt.

Eine weitere vorteilhafte Ausführung ist dadurch gekennzeichnet, dass die radial äußere Laufstreifenschicht die komplette Profilierung des Laufstreifens enthält.

Eine weitere bevorzugte Ausführung besteht darin, dass bei Variante b) der bzw. jeder schulterseitige Laufstreifenteil die jeweilige Footprintkante - ermittelt an der Außenfläche des Laufstreifens - in Richtung Reifenäquatorialebene in axialer Richtung um zumindest 2,0 mm überragt.

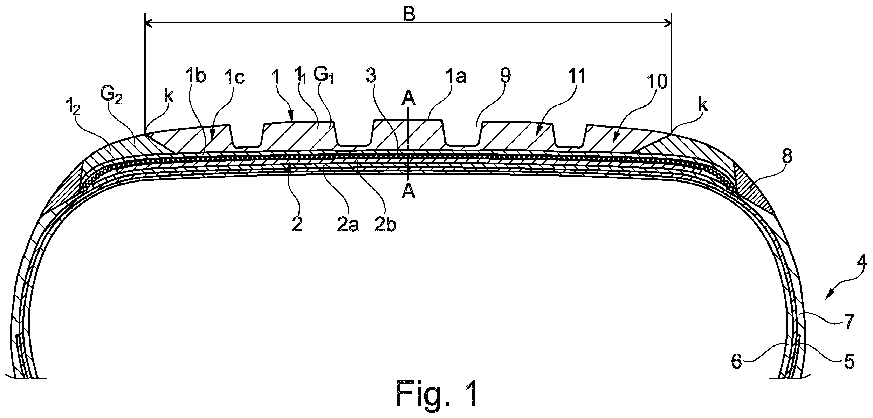

Weitere Merkmale, Vorteile und Einzelheiten der Erfindung werden nun anhand der einzigen Figur, Fig. 1, die schematisch einen Teilquerschnitt durch einen Fahrzeugluftreifen mit einer Ausführungsvariante der Erfindung zeigt, näher beschrieben.

Gemäß der Erfindung ausgeführte Fahrzeugreifen sind Reifen für Kraftfahrzeuge, insbesondere für mehrspurige Kraftfahrzeuge, bevorzugt für Personenkraftwagen (PKWs), Vans (Transporter) oder SUVs, sowie vorzugsweise Fahrzeugluftreifen, besonders bevorzugt Fahrzeugluftreifen in Radialbauart für Felgen mit einem ganzzahligen Felgendurchmesser von 13 Zoll bis 24 Zoll, insbesondere von 18 Zoll bis 23 Zoll.

Unter der "axialen Richtung" wird die senkrecht zur Reifenäquatorialebene verlaufende Richtung verstanden.

Fig. 1 zeigt einen Teilquerschnitt eines Fahrzeugluftreifens, welcher ein PKW-Reifen ist, mit einem profilierten Laufstreifen 1, einem zweilagigen Gürtelverband 2, einer diesen radial außen bedeckenden Gürtelbandage 3, Seitenwandbereichen 4 und Abschnitten einer Karkasseinlage 5 und einer Innenschicht 6. Die Reifenäquatorialebene ist durch eine Linie A-A gekennzeichnet.

Die nicht gezeigten Wulstbereiche, die Karkasseinlage 5 und die Innenschicht 6 können in bekannter Weise ausgeführt sein.

Die Seitenwandbereiche 4 umfassen je eine Seitenwand 7, von welcher lediglich ein radial äußerer Abschnitt gezeigt ist, und einen im Schulterbereich des Fahrzeugreifens axial seitlich des Laufstreifens 1 ausgebildeten, bis zur Seitenwand 7 reichenden Winggummi 8, wobei der Winggummi 8 einen sich verjüngenden Endabschnitt der Seitenwand 7 überdeckt.

Der Gürtelverband 2 besteht aus einer radial inneren Gürtellage 2a und einer radial äußeren Gürtellage 2b, wobei die Gürtellagen 2a, 2b jeweils aus in einer Gürtelgummierung eingebetteten, in jeder Gürtellage 2a, 2b parallel zueinander verlaufenden Festigkeitsträgern, beispielsweise aus Textilkorden bekannter Konstruktion, bestehen, wobei die Festigkeitsträger der radial inneren Gürtellage 2a jene der radial äußeren Gürtellage 2b in insbesondere bekannter Weise kreuzen.

Die Gürtelbandage 3 bedeckt die Gürtellagen 2a, 2b radial außen und besteht aus in einer Bandagengummierung eingebetteten, im Allgemeinen textilen, vorzugsweise aus Nylon oder Polyester gefertigten, Festigkeitsträgern.

Der Laufstreifen 1 weist eine in der Laufstreifenperipherie liegende Außenfläche 1a sowie eine Bodenaufstandsfläche mit in Umfangsrichtung verlaufenden axial äußeren Footprintkanten k und einer zwischen den Footprintkanten k in axialer Richtung ermittelten Footprintbreite B auf. Die Bodenaufstandsfläche entspricht bekannter Weise dem statisch ermittelten Footprint (ermittelt mit einem auf einer Normfelge montierten Reifen, Last bei 70% der maximalen Tragfähigkeit, Innendruck 85% des Normdrucks, gemäß ETRTO-Standards). Der Laufstreifen 1 ist beim gezeigten Ausführungsbeispiel in radialer Richtung zweischichtig aufgebaut und setzt sich aus einer bis zu den Winggummis 8 reichenden, radial inneren Laufstreifenschicht 1b, welche üblicherweise als Laufstreifenbase bezeichnet wird, und einer bis zu den Winggummis 8 reichenden, die Profilierung enthaltenden radial äußeren Laufstreifenschicht 1c, welche üblicherweise als Laufstreifencap bezeichnet wird, zusammen. Beim Ausführungsbeispiel gehören zur Profilierung vier in der radial äußeren Laufstreifenschicht 1c ausgebildete Umfangsillen 9, welche der radial äußeren Laufstreifenschicht 1c und damit dem Laufstreifen 1 zwei schulterseitige Profilrippen 10 und zwei mittlere Profilrippen 11 verleihen. Die Profilrippen 10, 11 sind insbesondere in bekannter Weise mit Rillen und/oder Einschnitten strukturiert, welche ebenfalls zur Profilierung gehören.

Die radial äußere Laufstreifenschicht 1c ist in axialer Richtung dreigeteilt und setzt sich aus einem zentralen Laufstreifenteil 1₁ und zwei an die axial äußeren Footprintkanten k anschließenden, schulterseitigen Laufstreifenteilen 1₂ zusammen. Die schulterseitigen Laufstreifenteile 1₂ können alternativ in die Bodenaufstandsfläche hineinragen, wobei sie - ermittelt an der Außenfläche 1a - in Richtung Reifenäquatorialebene die jeweilige Footprintkante k in axialer Richtung um bis zu 4,0 mm sowie insbesondere um zumindest 2,0 mm überragen. Ferner können die schulterseitigen Laufstreifenteile 1₂ komplett außerhalb der Bodenaufstandsfläche liegen und - ermittelt an der Außenfläche 1a - in Richtung Reifenäquatorialebene zur jeweiligen Footprintkante k in axialer Richtung einen Abstand von bis zu 4,0 mm aufweisen.

Der zentrale Laufstreifenteil 1₁ besteht aus einem Gummimaterial G₁ und die schulterseitigen Laufstreifenteile 1₂ bestehen aus einem für beide schulterseitige Laufstreifenteile 1₂ übereinstimmenden Gummimaterial G₂. Der zentrale Laufstreifenteil 1₁ und die beiden schulterseitigen Laufstreifenteile 1₂ sind daher aus unterschiedlichen Kautschukmischungen gefertigt.

Das Gummimaterial G₂, aus welchem die schulterseitigen Laufstreifenteile 1₂ bestehen, weist einen Verlustfaktor tan δ bei 70°C, ermittelt nach DIN 53 513 (Prüfung von Kautschuk und Elastomeren; Bestimmung der viskoelastischen Eigenschaften von Elastomeren bei erzwungenen Schwingungen außerhalb der Resonanz, Ausgabe 1990-03), von 10% bis 90%, insbesondere von 30% bis 60%, bevorzugt von 40% bis 50%, des Verlustfaktors tan δ bei 70°C, ermittelt nach DIN 53 513, des Gummimaterials G₁, aus welchem der zentrale Laufstreifenteil 1₁ besteht, auf.

Das Gummimaterial G₁ ist im Hinblick auf seinen Verlustfaktor tan δ bei 70°C insbesondere in Abhängigkeit des jeweiligen Reifentyps gewählt und beträgt für PKW-, Van- und Light-Truck-Reifen vorzugsweise 0,05 bis 0,16.

Die Verlustfaktoren tan δ bei 70°C können, wie dem Fachmann bekannt ist, insbesondere durch die Füllstoffmenge, die eingesetzten Füllstofftypen, durch das Verhältnis der Füllstoffe Ruß zu Silica (Kieselsäure) sowie durch die eingesetzten Kautschuktypen eingestellt bzw. beeinflusst werden. Hinsichtlich der Kautschuke sind insbesondere deren Glasübergangstemperaturen entscheidend. Der Verlustfaktor tan δ bei 70°C wird als Indikator für den Rollwiderstand und die Bremsperformance des Gummimaterials herangezogen.

Der Rollwiderstand ist umso geringer (besser), je kleiner der Verlustfaktor tan δ bei 70°C ist. Ein wichtiger Faktor bei der Reduzierung des Rollwiderstands ist bekannter Weise die Hysterese, also der Prozess der stattfindet, wenn sich der Fahrzeugreifen beim Abrollen verformt, was zu einem Energieverlust führt, der den Vorwärtsimpuls hemmt. Das Gummimaterial G₂ der schulterseitigen Laufstreifenteile 1₂ wird beim Abrollen des Reifens temporär besonders deutlich verformt ("abgeplattet"). Der kleinere Verlustfaktor des Gummimaterials G₂ sorgt für eine geringe Dämpfung, sodass die Energieverluste durch Hysterese im temporär besonders deutlich verformten Gummimaterial G₂ der schulterseitigen Laufstreifenteile 1₂ gering gehalten werden.

Die Bremsperformance ist umso besser, je größer der Verlustfaktor tan δ bei 70°C ist. Das Gummimaterial G₁ des zentralen Laufstreifenteils 1₁ wird beim Abrollen (z.B. bei Geradeausfahrt) - im Vergleich zum Gummimaterial G₂ der schulterseitigen Laufstreifenteile 1₂ - weniger stark verformt. Das sich vor allem unter Bremsbelastung temporär stark verformende Gummimaterial G₁ des zentralen Laufstreifenteils 1₁ verbessert - bedingt durch die unter Bremsbelastung mit der Hysterese einhergehende Hemmung des Vorwärtsimpulses - die Bremsperformance.

Die Erfindung ist auf das beschriebene Ausführungsbeispiel nicht beschränkt.

Bei einer weiteren Ausführungsvariante ist der Laufstreifen 1 in radialer Richtung einschichtig aufgebaut, sodass bei dieser Variante der gesamte Laufstreifen 1 aus den zwei schulterseitigen Laufstreifenteilen 1₂ und dem zentralen Laufstreifenteil 1₁ besteht.

Ferner kann der Laufstreifen 1 in radialer Richtung mehr als zwei, insbesondere drei oder vier Schichten aufweisen, wobei zumindest die radial äußerste Schicht aus den zwei schulterseitigen Laufstreifenteilen 1₂ und dem zentralen Laufstreifenteil 1₁ besteht.

Die Winggummis sind optional, sodass der Laufstreifen bis zu den Seitenwänden reichen kann.

Bei sämtlichen Ausführungen weist der Laufstreifen jeweils in zumindest einer Reifenschulter einen schulterseitigen Laufstreifenteil auf.

### Bezugszeichenliste

- 1: Laufstreifen
- 1₁: zentraler Laufstreifenteil
- 1₂: schulterseitiger Laufstreifenteil
- 1a: Außenfläche
- 1b: radial innere Laufstreifenschicht
- 1c: radial äußere Laufstreifenschicht
- 2: Gürtelverband
- 2a: radial innere Gürtellage
- 2b: radial äußere Gürtellage
- 3: Gürtelbandage
- 4: Seitenwandbereich
- 5: Karkasseinlage
- 6: Innenschicht
- 7: Seitenwand
- 8: Winggummi
- 9: Umfangsrille
- 10: schulterseitige Profilrippe
- 11: mittlere Profilrippe
- A-A: Linie (Reifenäquatorialebene)
- B: Footprintbreite
- B₁: Breite
- G₁, G₂: Gummimaterial
- k: axial äußere Footprintkante

## Patentansprüche

1. Fahrzeugreifen mit einem Laufstreifen (1) mit einer Bodenaufstandsfläche mit einer Footprintbreite (B) und zwei Footprintkanten (k), wobei der Laufstreifen (1) oder eine die Außenfläche (1a) des Laufstreifens (1) mitbildende, radial äußere Laufstreifenschicht (1c) in axialer Richtung aus einem Laufstreifenhauptteil (1₁) und einem schulterseitigen Laufstreifenteil (1₂) oder aus dem Laufstreifenhauptteil (1₁) und je einem schulterseitigen Laufstreifenteil (1₂) in jeder Laufstreifenschulter gebildet ist, wobei der bzw. jeder schulterseitige Laufstreifenteil (1₂)
a) an der Außenfläche (1a) an der jeweiligen Footprintkante (k) endet und ausgehend von dieser in Richtung zum jeweiligen seitlichen Laufstreifenrand verläuft,
b) die jeweilige Footprintkante (k) - ermittelt an der Außenfläche (1a) des Laufstreifens (1) - in Richtung Reifenäquatorialebene (Linie A-A) in axialer Richtung um bis zu 4,0 mm überragt oder
c) zur jeweiligen Footprintkante (k) - ermittelt an der Außenfläche (1a) des Laufstreifens (1) - in Richtung Reifenäquatorialebene (Linie A-A) in axialer Richtung einen Abstand aufweist,
wobei der Laufstreifenhauptteil (1₁) und der bzw. jeder schulterseitige Laufstreifenteil (1₂) aus Gummimaterial (G₁, G₂) mit je einem Verlustfaktor tan δ bei 70°C, ermittelt nach DIN 53 513, bestehen, wobei der Verlustfaktor tan δ bei 70° des Gummimaterials (G₁) des Laufstreifenhauptteils (1₁) vom Verlustfaktor tan δ bei 70° des Gummimaterials (G₂) des bzw. jedes schulterseitigen Laufstreifenteils (1₂) abweicht,
**dadurch gekennzeichnet,**
**dass** der Verlustfaktor tan δ bei 70°C des Gummimaterials (G₂) des bzw. jedes schulterseitigen Laufstreifenteils (1₂) kleiner ist als der Verlustfaktor tan δ bei 70°C des Gummimaterials (G₁) des Laufstreifenhauptteils (1₂).

2. Fahrzeugreifen nach Anspruch 1, **dadurch gekennzeichnet, dass** der Verlustfaktor tan δ bei 70°C des Gummimaterials (G₂) des bzw. jedes schulterseitigen Laufstreifenteils (1₂) 10% bis 90%, insbesondere 30% bis 60%, bevorzugt 40% bis 50%, des Verlustfaktors tan δ bei 70°C des Gummimaterials (G₁) des Laufstreifenhauptteils (1₁) beträgt.

3. Fahrzeugreifen nach Anspruch 1 oder 2, **dadurch gekennzeichnet, dass** der Verlustfaktor tan δ bei 70°C des Gummimaterials (G₁) des Laufstreifenhauptteils (1₁) 0,05 bis 0,16 beträgt.

4. Fahrzeugreifen nach einem der Ansprüche 1 bis 3, **dadurch gekennzeichnet, dass** die radial äußere Laufstreifenschicht (1₁) die komplette Profilierung des Laufstreifens (1) enthält.

5. Fahrzeugreifen nach einem der Ansprüche 1 bis 4, **dadurch gekennzeichnet, dass** bei Variante b) der bzw. jeder schulterseitige Laufstreifenteil (1₂) die jeweilige Footprintkante (k) - ermittelt an der Außenfläche (1a) des Laufstreifens (1) - in Richtung Reifenäquatorialebene (Linie A-A) in axialer Richtung um zumindest 2,0 mm überragt.

6. Fahrzeugreifen nach einem der Ansprüche 1 bis 5, **dadurch gekennzeichnet, dass** der Laufstreifen (1) bis zu den Seitenwänden (7) reicht.

7. Fahrzeugreifen nach einem der Ansprüche 1 bis 5, **dadurch gekennzeichnet, dass** dieser zwei Seitenwandbereiche (4) aufweist, welche jeweils eine Seitenwand (7) und einen im Schulterbereich des Fahrzeugreifens axial seitlich des Laufstreifens (1) ausgebildeten, bis zur Seitenwand (7) reichenden Winggummi (8) aufweisen, wobei der Winggummi (8) einen sich verjüngenden Endabschnitt der Seitenwand (7) überdeckt.

## Claims

1. Vehicle tyre with a tread (1), with a ground contact surface with a footprint width (B) and two footprint edges (k), wherein the tread (1) or a radially outer tread layer (1c) that conjointly forms the outer surface (1a) of the tread (1) is formed in the axial direction from a tread main part (1₁) and a shoulder-proximal tread part (1₂), or from the tread main part (1₁) and in each case one shoulder-proximal tread part (1₂) in each tread shoulder, wherein the or each shoulder-proximal tread part (1₂)
a) terminates at the outer surface (1a) on the respective footprint edge (k) and, proceeding therefrom, extends in the direction towards the respective lateral tread periphery,
b) protrudes beyond the respective footprint edge (k) - determined on the outer surface (1a) of the tread (1) - in the direction of the tyre equatorial plane (line A-A) by up to 4.0 mm in the axial direction, or
c) has in the axial direction a spacing from the respective footprint edge (k) - determined on the outer surface (1a) of the tread (1) - in the direction of the tyre equatorial plane (line A-A),
wherein the tread main part (1₁) and the, or each, shoulder-proximal tread part (1₂) consist of rubber material (G₁, G₂), each having a loss factor tan δ at 70°C, determined according to DIN 53 513, wherein the loss factor tan δ at 70° of the rubber material (G₁) of the tread main part (1₁) deviates from the loss factor tan δ at 70° of the rubber material (G₂) of the, or of each, shoulder-proximal tread part (1₂),
**characterized in that**
the loss factor tan δ at 70°C of the rubber material (G₂) of the, or of each, shoulder-proximal tread part (1₂) is less than the loss factor tan δ at 70°C of the rubber material (G₁) of the tread main part (1₂).

2. Vehicle tyre according to Claim 1, **characterized in that** the loss factor tan δ at 70°C of the rubber material (G₂) of the, or of each, shoulder-proximal tread part (1₂) is 10% to 90%, in particular 30% to 60%, preferably 40% to 50%, of the loss factor tan δ at 70°C of the rubber material (G₁) of the tread main part (1₁).

3. Vehicle tyre according to Claim 1 or 2, **characterized in that** the loss factor tan δ at 70°C of the rubber material (G₁) of the tread main part (1₁) is 0.05 to 0.16.

4. Vehicle tyre according to one of Claims 1 to 3, **characterized in that** the radially outer tread layer (1₁) contains the complete profiling of the tread (1).

5. Vehicle tyre according to one of Claims 1 to 4, **characterized in that**, in variant b), the or each shoulder-proximal tread part (1₂) protrudes beyond the respective footprint edge (k) - determined on the outer surface (1a) of the tread (1) - in the direction of the tyre equatorial plane (line A-A) by at least 2.0 mm in the axial direction.

6. Vehicle tyre according to one of Claims 1 to 5, **characterized in that** the tread (1) extends as far as the side walls (7).

7. Vehicle tyre according to one of Claims 1 to 5, **characterized in that** said vehicle tyre has two side wall regions (4) which have in each case one side wall (7) wing rubber (8) which is formed in the shoulder region of the vehicle tyre axially laterally of the tread (1) and extends as far as the side wall (7), wherein the wing rubber (8) covers a tapered end portion of the side wall (7).

## Revendications

1. Pneu de véhicule comprenant une bande de roulement (1) présentant une surface de contact avec le sol avec une largeur d'empreinte (B) et deux bords d'empreinte (k), la bande de roulement (1) ou une couche de bande de roulement radialement extérieure (1c) formant la surface extérieure (1a) de la bande de roulement (1) étant formée, dans la direction axiale, d'une partie principale de bande de roulement (1₁) et d'une partie de bande de roulement côté épaulement (1₂), ou de la partie principale de bande de roulement (1₁) et d'une partie de bande de roulement côté épaulement (1₂) dans chaque épaulement de la bande de roulement, la ou chaque partie de bande de roulement côté épaulement (1₂)
a) se terminant à la surface extérieure (1a) au niveau du bord d'empreinte correspondant (k) et s'étendant, à partir de celui-ci, en direction du bord de bande de roulement latéral correspondant,
b) dépassant, dans la direction de la plan équatorial du pneu (ligne A-A), en direction axiale, le bord d'empreinte correspondant (k) - déterminé à la surface extérieure (1a) de la bande de roulement (1) - de jusqu'à 4,0 mm, ou
c) présentant, par rapport au bord d'empreinte correspondant (k) - déterminé à la surface extérieure (1a) de la bande de roulement (1) - un écart dans la direction de la plan équatorial du pneu (ligne A-A), en direction axiale,
la partie principale de bande de roulement (1₁) et la ou chaque partie de bande de roulement côté épaulement (1₂) étant constituées de matériau en caoutchouc (G₁, G₂) présentant chacun un facteur de perte tan δ à 70 °C, déterminé selon la norme DIN 53 513, le facteur de perte tan δ à 70 °C du matériau en caoutchouc (G₁) de la partie principale de bande de roulement (1₁) étant différent du facteur de perte tan δ à 70 °C du matériau en caoutchouc (G₂) de la ou de chaque partie de bande de roulement côté épaulement (1₂),
**caractérisé**
**en ce que** le facteur de perte tan δ à 70 °C du matériau en caoutchouc (G₂) de la ou de chaque partie de bande de roulement côté épaulement (1₂) est inférieur au facteur de perte tan δ à 70 °C du matériau en caoutchouc (G₁) de la partie principale de bande de roulement (1₂).

2. Pneu de véhicule selon la revendication 1, **caractérisé en ce que** le facteur de perte tan δ à 70 °C du matériau en caoutchouc (G₂) de la ou de chaque partie de bande de roulement côté épaulement (1₂) représente de 10 % à 90 %, en particulier de 30 % à 60 %, de préférence de 40 % à 50 %, du facteur de perte tan δ à 70 °C du matériau en caoutchouc (G₁) de la partie principale de bande de roulement (1₁).

3. Pneu de véhicule selon la revendication 1 ou 2, **caractérisé en ce que** le facteur de perte tan δ à 70 °C du matériau en caoutchouc (G₁) de la partie principale de bande de roulement (1₁) est de 0,05 à 0,16.

4. Pneu de véhicule selon l'une quelconque des revendications 1 à 3, **caractérisé en ce que** la couche de bande de roulement radialement extérieure (1₁) comporte l'intégralité du profilage de la bande de roulement (1).

5. Pneu de véhicule selon l'une quelconque des revendications 1 à 4, **caractérisé en ce que**, dans la variante b), la ou chaque partie de bande de roulement côté épaulement (1₂) dépasse, dans la direction du plan équatorial du pneu (ligne A-A), en direction axiale, le bord d'empreinte correspondant (k) - déterminé à la surface extérieure (1a) de la bande de roulement (1) - d'au moins 2,0 mm.

6. Pneu de véhicule selon l'une quelconque des revendications 1 à 5, **caractérisé en ce que** la bande de roulement (1) s'étend jusqu'aux parois latérales (7).

7. Pneu de véhicule selon l'une quelconque des revendications 1 à 5, **caractérisé en ce qu'**il présente deux zones de paroi latérale (4), comprenant chacune une paroi latérale (7) et un caoutchouc d'aile (8) formé axialement latéralement au niveau de l'épaulement du pneu de véhicule, à côté de la bande de roulement (1), et s'étendant jusqu'à la paroi latérale (7), le caoutchouc d'aile (8) recouvrant une section d'extrémité amincie de la paroi latérale (7).
